# EUROPEAN PATENT SPECIFICATION

(11) **EP 2 700 044 B1**
(45) Date of publication and mention of the grant of the patent: **02.01.2019**
(21) Application number: 11719210.4
(22) Date of filing: 18.04.2011
(51) Int. Cl.: G06Q 20/34, G06Q 20/38, G06Q 20/40, G07F 7/08, G06K 19/07, G06K 19/077

(54) **AUTHENTICATION DEVICE WITH PHOTOSENSITIVE INPUT KEYS**
AUTHENTIFIZIERUNGSVORRICHTUNG MIT LICHTEMPFINDLICHEN EINGABETASTEN
DISPOSITIF D'AUTHENTIFICATION À TOUCHES D'ENTRÉE PHOTOSENSIBLES

(43) Date of publication of application: 26.02.2014
(73) Proprietor: C-Sigma S.r.l., 23900 Lecco (IT)
(72) Inventor: GHISLANZONI, Luca, 23900 Lecco (IT)
(86) International application number: PCT/EP2011/056166
(87) International publication number: WO 2012/143039

(56) References cited:
- WO-A2-2006/138440
- WO-A2-2009/148980
- FR-A1- 2 728 710
- GB-A- 2 407 189
- US-A1- 2006 161 789
- US-A1- 2011 079 646

## Description

The present invention relates in general to authentication systems and more specifically to an authentication device of the kind defined in the preamble of claim 1.

US 2006/0161789 A1 discloses an authentication device of that kind, comprising a user interface device, such as a touch pad, or one or more buttons, and a biometric sensor.

US 2011/0079646 A1 discloses a chip card provided with a light-sensing security module which, if not exposed to light, blocks the operation of the card.

GB 2 407 189 A discloses a smart card with a built-in photo-diode which when exposed to light enables the smart card.

In order to grant access to secure systems, various methods and apparatuses for user's authentication are already known to the skilled in the art. Remote banking, internet shopping, Virtual Private Networks (VPNs) access, are typical services that can benefit from a secure user authentication procedure. The most widely adopted of said well-known procedures are typically based on a two factors authentication approach: after entering the User ID to start a login session, the user enters a Secret Code (the first factor) known only to the user and to the provider of the authentication service (called hereafter Authorisation Authority); the user is then asked to enter a One Time Password, OTP (the second factor), generated when the user presses a key switch available on a token, thereby starting an OTP generation process based on any of the encryption methods known in the art; after verification of consistency of both the first and second factors, the server at the Authorisation Authority side finally grants access to the user.

Most of the commercially available authentication devices generate OTPs applying one of the basic methods well known to the skilled in the art:
- Event Based: whereby a new OTP is generated each time the user activates a push-button.
- Time Based: whereby the authentication device includes a Real Time Clock capable of counting a Time Value. Various proprietary and open-source algorithms then exist to encrypt said Time Value with a secret user specific Seed value as to generate a new OTP. Said Seed is secretly stored within the authentication device, and it is known only to the Authorisation Authority.
- Challenge Code Encryption: whereby the authentication device features means for entering a Challenge Code issued by the Authorisation Authority (a different Challenge Code is issued at each login session). Various proprietary and open-source algorithms then exist to encrypt said Challenge Code with a secret user specific Seed value as to generate a new OTP. Said Seed is secretly stored within the authentication device, and it is known only to the Authorisation Authority.
- Challenge Response Transaction Signature: whereby the authentication device, besides featuring one of the authentication methods heretofore, is in addition capable of digitally sign transaction data. The data referring to the transaction (in the following generically referred to as To-Be-Signed Data) are keyed in by the user on the keypad of the authentication device, which then applies a digital signature as to generate a few digits code displayed on its display device. Notable examples are the German "Sm@rt-TAN" and "Sm@rt-TAN Optic" protocols.

In the following we will refer to the above authentication methods as "Authentication Methods Known in the Art". A recent example of a credit card size, Event Based, OTP generator device is represented by the VeriSign® VIP Security Card. Notable examples of a commercially available solutions implementing Time Value Encryption are the authentication tokens from RSA Security (SecurID® token). An apparatus exploiting the Challenge Code Encryption approach is disclosed in WO 2005/020036 A2 whereby, by means of photo-sensors, the token can read a challenge code issued by the service provider by decoding modulated light signals displayed on a computer monitor. A further example is described in WO 2007/057603 A1, whereby a new OTP is generated each time the user authenticates itself by entering a secret code through the small keypad featured on one side of the device. Said keypad can further be used to enter a challenge code. A recent example of authentication device capable of reading modulated light signals displayed on a computer monitor is disclosed in WO 2008/107008. A further example of authentication method capable of reading, by means of optical sensors, modulated light signals from computer monitors is disclosed in WO 2009/114616. The earliest example of an apparatus reading modulated light signals from a computer monitor for authentication purposes is perhaps the one disclosed in US 5136644 A.

For credit card size authentication devices activated by means of key switches, a concern is the reliability of the detection of the key switch activation. Credit card format type of authentication devices are preferred by the average user, as they can simply be stored in a wallet, making it very convenient and practical to carry them around. However, while in a wallet the token can be subject to flexing and other non predictable forces exerted on its sides by various objects (coins, for example). This might in turn result in spurious activations of the authentication device, with difficult to predict impacts on its overall reliability of use. The attempt to remedy this problem usually results in key switch designs requiring more force to activate contact closure, with the disadvantage for the user of a decreased tactile feedback of positive contact closure.

The present invention addresses the problem of improving the reliable detection of contact closure by an authentication device having the features defined in claim 1.When the user presses and then releases the key switch, the resulting switch contact closure-opening sequence is further processed by the microprocessor only if the corresponding photosensor detects a correlated variation in light input, resulting from the user's finger first obstructing and then allowing light to said photosensor. By correlating a key's contact closure-opening sequence with variations in the associated photosensor light input, a key activation can now be detected in a very reliable way. Spurious random switch closures taking place while the authentication device is stored in a wallet, and hence in darkness, will not result in any spurious key activation, as there will not be any concurrent variation in light input. A further benefit resulting from the availability of photosensitive elements is that the latter can in addition be used to input data to the authentication device in the form of modulated light signals generated by a computer monitor, or mobile phone display, and the like.

The following description will refer to input key switches, which are used for activating the authentication token, and-or to input data to it. The authentication token actually reacts to keystrokes, by that meaning the change of status of the key switch before going back to its normal status. From an electrical point of view a keystroke corresponds to a voltage pulse, characterized by a start (e.g.: the voltage variation resulting from the closing of normally open contacts, or the opening of normally closed contacts) and an end (e.g.: the voltage variation resulting from the reopening of normally open contacts, or the reclosing of normally closed contacts). Various types of suitable key switches are known to the skilled in the art:
- contacts closure based button and dome key switches, whereby the keystroke is defined as the pressing of the key switch, followed by its release ;
- piezoelectric, whereby the keystroke is defined by the voltage pulse generated when the user's finger first applies and then removes mechanical stress to a suitably mounted piezoelectric element;
- capacitive, whereby the keystroke is defined by the voltage pulse resulting from variation of the capacitance of a sensing element as a result of the user's finger first approaching and then withdrawing.

Based on the above considerations, in the following we will refer to the start of a keystroke as the start of the corresponding voltage pulse, and to the end of a keystroke as the end of the corresponding voltage pulse. The particular choice of switch technology being irrelevant to the scope of the present invention, we will use the term keystroke to implicitly refer to a keystroke generated by any of the different types of key switches listed above

Referring then to the photosensor, it may be selected from any of the common types known to the skilled in the art:
- photodiodes;
- phototransistors;
- photoresistors;
- photovoltaic cells.

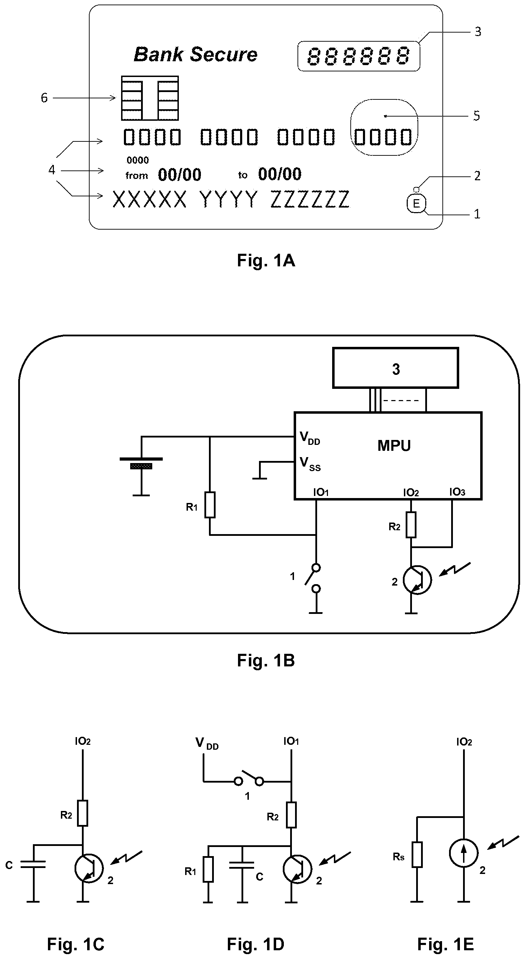

FIG. **1A** illustrates the preferred embodiment for a basic version. All components are of a sufficiently small size as to allow embedding into a card of standard ISO 7816 dimensions. When pressed by the user, the input key switch **1** activates the authentication device. A photosensor **2** is located sufficiently close to said key, so that when the user places his finger to press the key, the finger will concurrently block light to the photosensor.

Photosensor **2** may also be located on the back face of the card, as a suitable and ergonomic way to activate key switch **1** consists in holding the card with one hand, while pressing said key switch between the thumb and the index finger of the other hand. In fact, most users would hold the card with the left hand while facing the display on the front face, and then press the key between the right hand thumb pushing from the front face and the right hand index pushing from the back face. Upon detection of an input keystroke, a Microprocessor Unit, MPU, embedded in the card, generates a One Time Password and displays it on the display device **3** (suitable thin and flexible segmented displays are manufactured for example by the E-Ink corporation, www.eink.com).

A very convenient embodiment would then add to the just described authentication device also all those other features characterising conventional credit cards and ATM cards, such as:
- embossed personalization data fields **4,** consisting in card number, validity dates, Card Holder Name (as the embossing process may damage electronic components, the geometry of the embedded electronic circuitry of the authentication device is designed in such a way that no electronic components will be located in correspondence of the fields **4** reserved for the embossing of personalization data);
- an area **5** reserved for the security hologram present in most credit cards;
- a chip module **6,** for adding smart card functionalities.

Said chip module is in fact a small circuit on whose back side it is mounted a specialised tamper-resistant microprocessor chip, called smart card chip, which is then electrically connected to the contacts on the front side, contacts whose layout and functions are defined by ISO/IEC 7816 standard. Said chip module is then glued inside of a cavity milled on the front face of the card. For authentication devices featuring on their front face a chip module with smart card functionalities it is a simple task to add the possibility for the authentication device's MPU to exchange serial data, through the ISO/IEC 7816's specified T=0 or T=1 protocols, with said chip module. In this way it becomes possible to transfer to the authentication device MPU's memory useful data such as account balance, list of transactions, and the like, so that the user may then decide to review them on the display device **3.** Furthermore, a chip module represents a convenient place, from a manufacturing point of view, where to locate input key **1** and photosensor **2.**

FIG. **1B** schematically represents an example of suitable circuitry for the hardware implementation of the authentication device. A thin and flexible battery (for example, of the type of those manufactured by SOLICORE, www.solicore.com) supplies a MPU. To minimise power consumption, the MPU is held in SLEEP mode. When the user presses the input key switch **1,** its contacts closure brings to 0V the voltage at the MPU input pin **IO₁.** This event awakes the MPU from SLEEP, which immediately sets to logic HIGH output pin **IO₂,** thereby biasing phototransistor **2** (while in SLEEP mode, pin **IO₂** is set to logic LOW, so as to minimise overall current consumption). If no light is concurrently falling on phototransistor **2** (because of the user's finger blocking light), the voltage at input **IO₃** will therefore also be logic HIGH. Upon the release of the input key switch the voltage at input **IO₁** rises back to **V_{DD}** (through the pull-up resistor **R₁**), prompting the MPU to verify whether the voltage at input **IO₃** has in the meantime fallen to logic LOW, as a result of light now being allowed to reach phototransistor **2** following the removal of the user's finger. For the skilled in the art it will then be obvious how to realise equivalent configurations using pull-down resistors, rather than pull-up resistors, or vice versa. Upon successful verification of the sequence of events heretofore, the MPU will hence start the OTP generation algorithm, to then display the generated OTP on the display device **3.** After displaying said OTP the MPU will finally switch back to SLEEP mode. In order to spare battery energy, the MPU will switch back to SLEEP mode also in the case of a keystroke not validated by a corresponding increase, at the end of said keystroke, of the amount of light reaching the photosensor, as well as in the case of a keystroke lasting longer than a predetermined length of time, as these types of events would probably be the result of unwanted contacts closures.

To summarize, the MPU will start the OTP generation algorithm if:
a. it was first awakened from SLEEP mode by the start of a keystroke's voltage pulse at one of its inputs;
b. AND it has then detected, simultaneously with the end of said keystroke's voltage pulse, an increase of the amount of light reaching photosensor **2.**

FIG. **1C** illustrates an alternative way to connect phototransistor **2,** and whose main advantage is to require just one input/output pin instead of two, albeit at the cost of one added capacitor **C.** Following wake up from SLEEP the MPU configures pin **IO₂** as output, and sets it to logic HIGH. As no light is falling on phototransistor **2,** which is covered by the user's finger pressing on the activation key, capacitor **C** is consequently allowed to charge up to a voltage above the threshold for logic HIGH (most MPUs feature Schmitt trigger inputs), and this during a time shorter than the typical keystroke's voltage pulse duration. As soon as the contacts of switch **1** open again, and the end of the keystroke's voltage pulse is consequently detected, the MPU configures pin **IO₂** back to input, while **C** is still charged to logic HIGH. As light is now allowed back to phototransistor **2** (which is no longer covered by the user's finger), capacitor **C** discharges towards zero, and a transition HIGH to LOW can be detected at input pin **IO₂.**

FIG. **1D** illustrates yet another configuration, and which allows to reduce to just one the number of required input/output pins. While the MPU is in SLEEP mode its **IO₁** pin is configured as input, and the pull-down resistor **R₁** makes sure that said **IO₁** input sees a LOW logic level when the user's finger already obstructs light to phototransistor **2** before the actual contacts closure of switch **1** (in fact, if the worst case dark current of phototransistor **2** were sufficiently large, then **R₁** would not be necessary). When the user presses the input key switch **1,** its contacts closure brings to logic HIGH the voltage at the MPU input pin **IO₁.** This LOW to HIGH transition awakes the MPU from SLEEP. As no light is falling on phototransistor **2,** which is covered by the user's finger pressing on the activation key, capacitor **C** is allowed to charge up to a voltage above the threshold for logic HIGH, and this during a time shorter than the typical keystroke's voltage pulse duration. As soon as the contacts of switch **1** open again, light is allowed back to phototransistor **2** (no longer covered by the user's finger), capacitor **C** quickly discharges towards zero, and a transition HIGH to LOW can be detected at input pin **IO₂.** In case of spurious switch activation while inside a wallet, at the keystroke end no light will fall on phototransistor **2,** so that said HIGH to LOW transition will now be delayed by a time interval proportional to the product **R₁ C** (or proportionally to the value of the phototransistor dark current discharging **C**). By selecting said delay to last longer than a typical keystroke duration it hence becomes possible to discriminate between valid keystrokes and spurious keystrokes.

For the skilled in the art it will then be obvious how to realise equivalent configurations using pull-down resistors, rather than pull-up resistors, or vice versa.

FIG. **1E** illustrates the use of photovoltaic cells for photosensor **2.** The current source represents the photovoltaic cells current, which is the parameter most sensitive to the amount of illumination. Shunt resistor **R₁** converts said current to a voltage, then read by the MPU's input pin **IO₂.** In this case the presence of light will correspond to a logic HIGH voltage level (as individual photovoltaic cells typically provide only up to 0.5V-0.6V, it may turn out necessary to serially connect more cells).

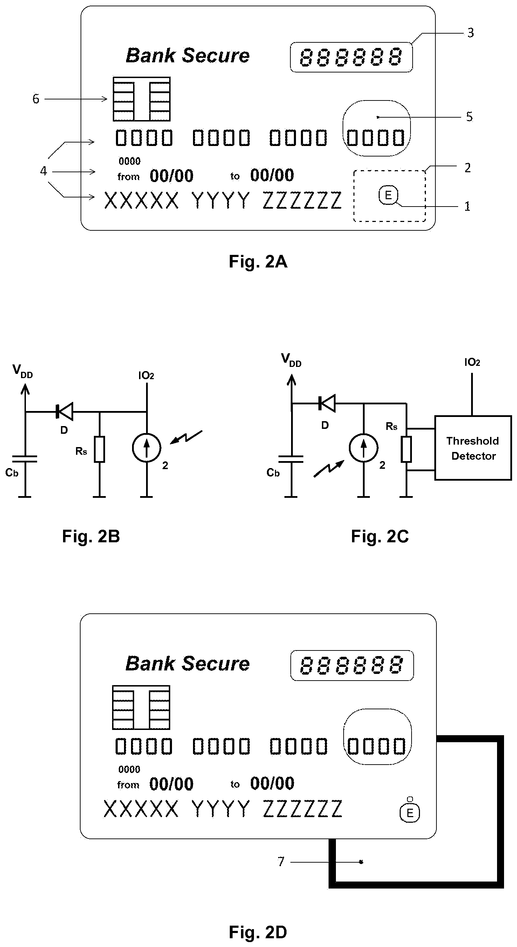

FIG. **2A** illustrates a second preferred embodiment, whereby photosensor **2** is a photovoltaic element whose generated energy is sufficient to cover the overall energy demand of the authentication token. Said photovoltaic element is actually a string of photovoltaic cells, serially connected in sufficient number (typically from 4 to 6 cells are sufficient) as to obtain a voltage level suitable for the operation of the MPU. Photosensor **2** is represented with a dashed outline, to mean that it is mounted on the back face of the card. As shown in the block diagram of FIG. **2B****,** when exposed to light the photovoltaic element charges a capacitor **Cb** through a diode **D.** When the user presses the key switch, the finger pressing from the back face will obstruct light to said photovoltaic element. As a result of this action the generated current drops significantly, and to such a low value that the voltage across the shunt resistor **Rs** is read as a logic LOW by the MPU's **IO₂** input. Capacitor **Cb** is sized to hold an amount of charge sufficient to ensure correct operation of the token until the end of the keystroke, when light will again illuminate the photovoltaic element. In a variation of said second preferred embodiment, the voltage across shunt resistor **Rs** is no longer directly read by the MPU's **IO₂** input, but it is first processed by a Threshold Detector circuitry, for example of the type known to the skilled in the art as comparator circuits. Such a circuit allows more flexibility in the choice of the threshold voltage value below which the logic level asserted to the MPU's **IO₂** input is switched to its complement state. In turn, this allows to increase the sensitivity of the detection of a black rectangle following a white rectangle, which in practice means that the user is now allowed to hold the authentication token at a larger distance from the screen, and hence increasing the tolerance with respect to unwanted movements of the user's hand holding the authentication device.

In addition to improving the reliability of keystrokes detection, the very same photosensor can then be exploited also for receiving data encoded in light modulated signals generated by suitable sources as to obtain at least two levels: a HIGH level of illumination, and a LOW level of illumination. In such case, said photosensor is mounted facing the back side, as to receive light from the back side of the authentication device. For the configuration of FIG. **1B** the discrimination between said HIGH and LOW levels of illumination could be achieved by holding HIGH output pin **IO₂**, while monitoring voltage level variations at input pin **IO₃**. For the configurations of FIG. **1C** and FIG. **1D** the status of the corresponding input-output pin (**IO₂** when referring to FIG. **1C****, IO₁** when referring to FIG. **1D**) is periodically sampled by first setting it as output, writing to it a HIGH logic level, waiting until capacitor **C** is fully charged to logic level HIGH, and then setting said **IO** pin as input. When a HIGH level of illumination reaches phototransistor **2,** the voltage at said MPU's input will quickly drop from logic level HIGH to logic level LOW, whereas a LOW level of illumination will result in a significantly postponed HIGH to LOW transition at said **IO** pin.

Then, a practical procedure is the following:
- the authentication device is activated by the detection of a keystroke, further validated by an increase of illumination on photosensor **2** at said keystroke's end, exactly as already explained above;
- once activated, instead of immediately generating an OTP the authentication device now enters a state in which it waits for further variations in the illumination of photosensor **2** ;
- as illustrated in FIG. **2D****,** the authentication device shall now be laid against image **7,** which will for example be shown on a computer screen, said image containing a time sequence of white rectangles suitably interleaved with black rectangles, sequence whose detailed structure encodes for a Challenge Code (typically 20 bits long, and continuously repeated until an OTP is entered by the user);
- upon detecting said Challenge Code, the MPU generates the corresponding OTP, and displays it on the display device **3;**
- to spare battery energy, if a valid Challenge Code is not detected within a predetermined length of time the MPU will switch back to SLEEP mode.

A particularly useful embodiment adds to the authentication device a Real Time Clock, so that a Time based OTP can be generated even for those transactions where a screen capable of displaying the time sequence of black and white rectangles heretofore is not available (e.g.: transactions over the phone). In such case, after detecting a first keystroke the authentication device enters the state in which it waits for further variations in the illumination of photosensor **2,** but if a second keystroke is detected then the one time password is instead generated according to a Time based type of algorithm making use of the time value counted by the Real Time Clock heretofore.

The capability to detect optically encoded data can be exploited at the personalization stage, whereby the secret user specific Seed needs to be securely transferred to the authentication device. A further useful application consists in exploiting said optical data transfer capability for sending To-Be-Signed Data to the authentication device, and so allowing to implement strategies very effective against attacks of the kind known to the skilled in the art as "man-in-the-middle" or "man-in-the-browser" attacks. In such cases, a typical transaction session would follow the few basic steps of the following example:
- a user wishes to order a bank transfer through a remote banking service;
- after successfully logging in to the required service, the user enters the amount to be transferred and the account number of the recipient;
- a sequence of white and black rectangles is then displayed on the corresponding web page, sequence which encodes for the most significant digits of the amount to be transferred (the number of most significant digits may vary according to type of currency, type of encryption method, etc.) grouping them with digits extracted from the recipient's account number, said group of digits representing the above mentioned To-Be-Signed Data, and further appending a Transaction Code (alternatively, said Transaction Code may simply consist in a counter value stored locally in the authentication device's MPU, and updated at each transaction, or in a time value generated by a real time clock added to the authentication device);
- by applying a keystroke to the input key, the user activates the authentication device, and then lays it against said encoding image to read said To-Be-Signed Data and appended Transaction Code;
- after successfully reading said data, the MPU displays on the authentication device's display the most significant digits of the amount to be transferred, as well as the digits extracted from the recipient's account number;
- verified that the digits shown on the authentication device's display correctly correspond to the requested transfer amount and recipient's account number, the user confirms them with a keystroke applied to the authentication device's input key;
- the MPU will then encrypt, with the user specific Seed, said To-Be-Signed Data and appended Transaction Code, to finally generate and display a One Time Password (or more precisely, a Transaction Authorisation Number, TAN), which the user will then need to enter for authorising the requested bank transfer.

Concerning the coding scheme and structure of the set of optically encoded data, no particular choice is detailed in this patent, as anyone skilled in the art can figure out several suitable solutions, and it would hence be too restrictive to bind the scope of this patent to a particular choice. It is therefore simply recalled that a typical approach would consist in inserting an identifier for the type of data (e.g.: Challenge Code, or Balance, or Seed, or To-Be-Signed Data, etc.), followed by the actual data, and ending with a verification code, such as for example any of the various types of Cyclic Redundancy Check (CRC) error detecting codes known to the skilled in the art. When the received data has passed the error detecting verification it is then said to be valid (e.g.: valid Challenge Code, or valid Balance, or valid Seed, or To-Be-Signed Data, etc.). Additional embodiments of the invention would adopt a plurality of photosensors, each disposed in such a way as to face dedicated portions of the screen, each of said portions displaying a time sequence of white rectangles suitably interleaved with black rectangles, with the aim to simultaneously encode more bits, and-or a clock signal, by any of the numerous encoding methods that the skilled in the art can easily imagine. Examples are shown in:

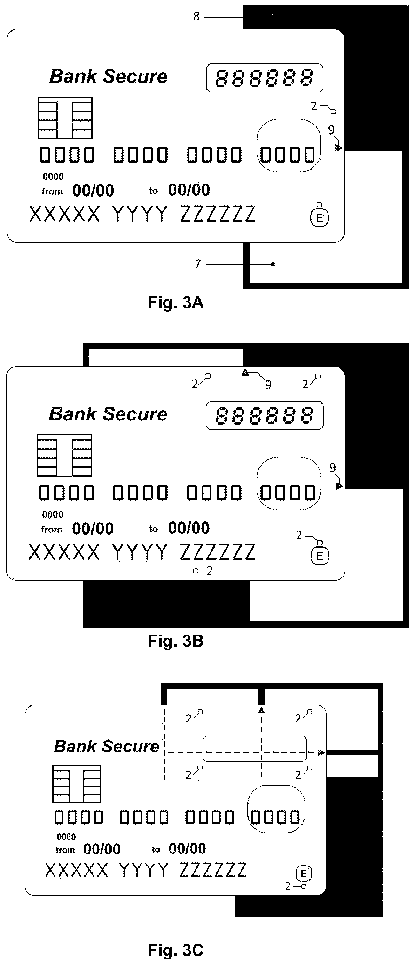

- FIG. **3A****,** whereby a second photosensor **2** is added for reading the time sequence encoded by image **8.** The authentication device features an alignment mark **9,** which the user shall align with the boundary between image **7** and image **8.**
- FIG. **3B****,** whereby three photosensors **2** are added for reading the time sequences encoded by the three additional images. The authentication device now features two alignment mark **9,** which the user shall align with the image boundaries as shown.
- FIG. **3C****,** whereby four photosensors **2** are added for reading the time sequences encoded by the four additional images (the dashed lines identify their boundaries, which are hidden by the card). The authentication device now features two alignment mark **9,** which the user shall align with the image boundaries as shown.

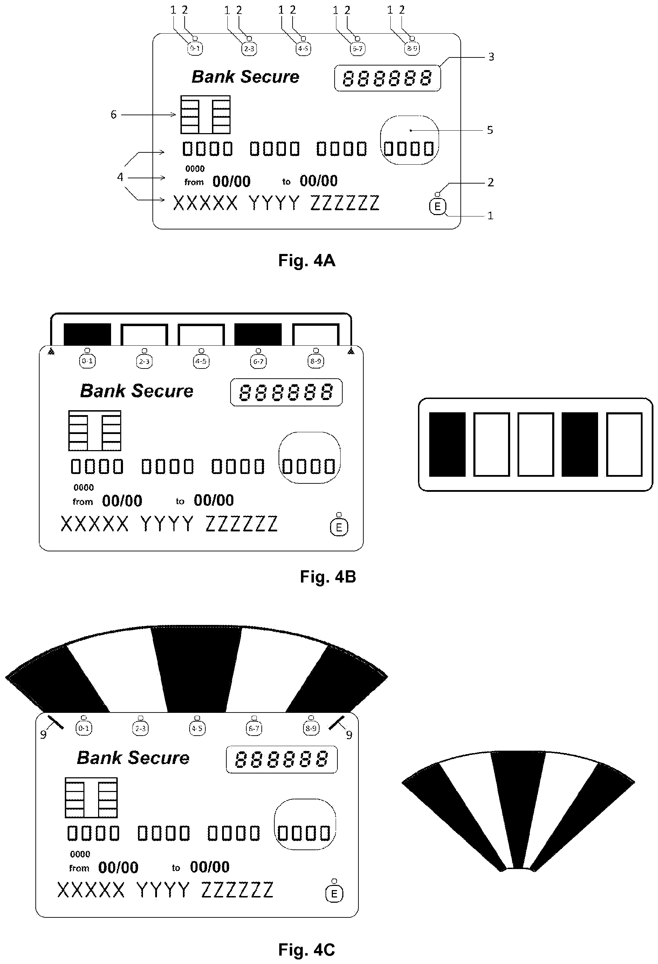

All of the image patterns depicted in FIG. **2D****,** FIG. **3A,** and FIG. **3B****,** feature the property that no rescaling is required when shown on computer screens of different sizes. When displayed on the smallest computer screen foreseen, it is sufficient that the dimensions of said patterns be such that the photosensors **2** will overlap the corresponding images (when the marks **9** are properly aligned with the corresponding image boundaries). Displaying then the same image patterns on larger computer screens will automatically ensure that said photosensors will still overlap the corresponding images, regardless of their now increased size. This useful property does not apply to the pattern depicted in FIG. **3C****,** but which is anyway designed to cover, without needing to rescale, most part of the range of commonly available sizes of computer screens. FIG. **4A** depicts one more embodiment, whereby five more photosensitive input keys are added. In this way it is now possible, for the user, to manually enter a secret code before gaining access to the functionalities of the authentication token. Said input keys can also be used to enter a Challenge Code, and/or or To-Be-Signed Data, during so called Card Not Present transactions (e.g.: purchases over the phone) and when a screen capable of displaying the time sequence of black and white rectangles heretofore is not available. The five keys shown in FIG. **4A** are used for entering the numbers from 0 to 9, according to the following procedure:
- for entering the first number displayed on a key (0, for example) it is sufficient to apply a single keystroke. When, at the end of said single keystroke, light is detected by the key's photosensor (i.e.: the users removes his finger), then the MPU will accept said first number.
- For entering the second number displayed on the key (1, for example) it is then necessary, within a predetermined length of time, to apply a second keystroke. When, at the end of said second keystroke, light is detected by the key's photosensor (i.e.: the users removes his finger), then the MPU will accept said second number instead of the first one.

Naturally, when said input key's photosensors are mounted on the back face of the authentication device they can also be used for reading optically encoded data from a computer screen, and exactly in the same way as explained above for the case of a single input key. FIG. **4B** depicts an example of suitable image pattern, whereby each of the five rectangles is meant to represents a time sequence of white and black rectangle. A disadvantage of the image pattern of FIG. **4B** is that it requires rescaling when shown on computer screens of differing sizes, so that the client application would need to provide means for the user to rescale said image pattern until the alignment marks on the authentication device are correctly aligned with the image pattern boundaries. The image pattern of FIG. **4C** does not instead require rescaling, provided that the user takes care of properly aligning with the image boundaries the alignment marks **9.**

## Claims

1. An authentication device having the shape of a credit card, and hence featuring a major front face parallel to a major back face, comprising:
a. a key switch (1) and a photosensor (2), wherein said key switch (1) is electrically connected in such a way that a voltage pulse is generated when a keystroke is applied to said key switch (1) by a user of the authentication device, said voltage pulse having a start and an end;
b. a battery or a photovoltaic element for powering the authentication device;
c. a microprocessor unit (MPU), whereby said microprocessor unit (MPU) is arranged so that it is awakened from sleep mode by the start of a keystroke's voltage pulse, and after the end of said keystroke voltage pulse it verifies the output from said photosensor (2) and in case of positive verification it generates a one time password (OTP), while in all cases the microprocessor unit (MPU) switches back to sleep mode within predetermined lengths of time;
d. a display device (3) for displaying the one time password (OTP) heretofore; the authentication device being **characterized in that** it comprises a photosensitive input key (1, 2) consisting of said key switch (1) paired with said photosensor (2), wherein said photosensor (2) is disposed sufficiently close to said key switch (1) so that when the user of the authentication device applies a keystroke by pressing said key switch (1) with a finger, or between two fingers pressing from the two opposite faces of the authentication device, one finger also covers the photosensor (2) substantially reducing the amount of light reaching said photosensor (2) and **in that** when verifying the output from said photosensor, said microprocessor unit (MPU) is arranged to verify whether a predetermined increase of the amount of light reaching the photosensor (2) heretofore has taken place substantially at the same time as the end of said keystroke's voltage pulse.

2. The authentication device of claim 1, further comprising a real time clock, wherein the one time password generation algorithm is of a current time based type making use of the time value counted by said real time clock.

3. An authentication device according to claim 1, wherein:
said microprocessor unit (MPU) is arranged so that upon said positive verification it further waits for light modulated signals from said photosensor (2) until it detects a valid code, and consequently it starts generating a one time password when said valid code represents a challenge code, or generating a transaction authorization number when said valid code represents to-be-signed data, or writing to memory a user specific secret seed when said valid code represents a secret seed and the authentication device has not yet been personalised, while in all cases the microprocessor unit (MPU) switches back to sleep mode within predetermined lengths of time;
the display device (3) being arranged for displaying said one time password, or said transaction authorisation number.

4. The authentication device of claim 3, wherein when said microprocessor unit (MPU) detects a second keystroke while waiting for a valid code, and the authentication device has already been personalised with the user specific secret seed, the one time password is instead generated according to an event based type of algorithm.

5. The authentication device of claim 3, further comprising a real time clock, and wherein if said microprocessor unit (MPU) detects a second keystroke while waiting for a valid code, and the authentication device has already been personalised with the user specific secret seed, then the one time password is instead generated according to a time based type of algorithm making use of the time value counted by said real time clock.

6. The authentication device of claim 3, further including one or more additional photosensors (2) disposed in such a way that by laying the authentication device against a screen, each photosensor (2) overlaps a different area of an image pattern (7, 8) shown on said screen, each of said image pattern's areas switching between a high and a low level of light intensity according to a time sequence encoding for the data to be transferred in parallel, whereby higher rates of data transfer can be achieved.

7. The authentication device of claim 6, wherein when said microprocessor unit (MPU) detects a second keystroke while waiting for a valid code, and the authentication device has already been personalised with the user specific secret seed, then the one time password (OTP) is instead generated according to an event based type of algorithm.

8. The authentication device of claim 6, further comprising a real time clock, and wherein when said microprocessor unit (MPU) detects a second keystroke while waiting for a valid code, and the authentication device has already been personalised with the user specific secret seed, then the one time password (OTP) is instead generated according to a time based type of algorithm making use of the time value counted by said real time clock.

9. The authentication device of any of claims 3 to 5, further including at least one more photosensitive input key, allowing the user of the authentication device to transfer to the microprocessor unit (MPU), by means of keystrokes combinations, complex requests and data.

10. The authentication device of any of claims 1, 3, 4, 6, 7 and 9, wherein said battery is removed and at least one of said photosensors (2) is a photovoltaic element and the authentication device is powered from the light collected by the photosensor (2).

## Patentansprüche

1. Authentifizierungsvorrichtung, die die Form einer Kreditkarte hat und daher eine wesentliche Vorderseite, die zu einer wesentlichen Rückseite parallel ist, aufweist und die Folgendes umfasst:
a. einen Schlüsselschalter (1) und einen Photosensor (2), wobei der Schlüsselschalter (1) elektrisch derart verbunden ist, dass ein Spannungsimpuls erzeugt wird, wenn von einem Benutzer der Authentifizierungsvorrichtung ein Tastenanschlag auf den Schlüsselschalter (1) angewendet wird, wobei der Spannungsimpuls einen Start und ein Ende hat;
b. eine Batterie oder ein photovoltaisches Element für eine Stromversorgung der Authentifizierungsvorrichtung;
c. eine Mikroprozessoreinheit (MPU), wobei die Mikroprozessoreinheit (MPU) derart angeordnet ist, dass sie durch den Start des Spannungsimpulses eines Tastenanschlags aus dem Schlafmodus geweckt wird und nach dem Ende des Tastenanschlagspannungsimpulses die Ausgabe vom Photosensor (2) verifiziert und im Fall einer positiven Verifizierung ein einmaliges Passwort (OTP) erzeugt, während die Mikroprozessoreinheit (MPU) in allen Fällen innerhalb einer vorbestimmten Zeitlänge in den Schlafmodus zurückschaltet;
d. eine Anzeigevorrichtung (3) zum vorherigen Anzeigen des einmaligen Passworts (OTP); wobei die Authentifizierungsvorrichtung **dadurch gekennzeichnet ist, dass** sie eine photosensitive Eingabetaste (1, 2) umfasst, die aus dem Schlüsselschalter (1), der mit dem Photosensor (2) gepaart ist, besteht, wobei der Photosensor (2) ausreichend nahe am Schlüsselschalter (1) positioniert ist, derart, dass, wenn der Benutzer der Authentifizierungsvorrichtung durch Drücken des Schlüsselschalters (1) mit einem Finger oder zwischen zwei Fingern, die von den beiden gegenüberliegenden Seiten der Authentifizierungsvorrichtung drücken, einen Tastenanschlag anwendet, ein Finger auch den Photosensor (2) abdeckt, wodurch die Menge Licht, die den Photosensor (2) erreicht, im Wesentlichen reduziert wird, und dadurch, dass, die Mikroprozessoreinheit (MPU) beim Verifizieren der Ausgabe vom Photosensor angeordnet ist zu verifizieren, ob eine vorbestimmte Erhöhung der Menge Licht, die den Photosensor (2) erreicht, vorher im Wesentlichen zu derselben Zeit wie das Ende des Spannungsimpulses des Tastenanschlags erfolgt ist.

2. Authentifizierungsvorrichtung nach Anspruch 1, die ferner eine Echtzeituhr umfasst, wobei der Algorithmus zum Erzeugen des einmaligen Passworts ein auf der aktuellen Zeit basierender Typ ist, der den von der Echtzeituhr gezählten Zeitwert verwendet.

3. Authentifizierungsvorrichtung nach Anspruch 1, wobei:
die Mikroprozessoreinheit (MPU) derart angeordnet ist, dass sie nach der positiven Verifizierung weiter auf lichtmodulierte Signale vom Photosensor (2) wartet, bis sie einen gültigen Code delektiert, und folglich beginnt, ein einmaliges Passwort zu erzeugen, wenn der gültige Code einen Abfragecode repräsentiert, oder eine Transaktionsautorisierungsnummer zu erzeugen, wenn der gültige Code zu signierende Daten repräsentiert, oder einen benutzerspezifischen geheimen Seed in einen Speicher zu schreiben, wenn der gültige Code einen geheimen Seed repräsentiert und die Authentifizierungsvorrichtung noch nicht personalisiert wurde, während die Mikroprozessoreinheit (MPU) in allen Fällen innerhalb einer vorbestimmten Zeitlänge in einen Schlafmodus zurückschaltet;
wobei die Anzeigevorrichtung (3) angeordnet ist, das einmalige Passwort oder die Transaktionsautorisierungsnummer anzuzeigen.

4. Authentifizierungsvorrichtung nach Anspruch 3, wobei, wenn die Mikroprozessoreinheit (MPU) einen zweiten Tastenanschlag detektiert, während sie auf einen gültigen Code wartet, und die Authentifizierungsvorrichtung bereits mit dem benutzerspezifischen geheimen Seed personalisiert wurde, das einmalige Passwort stattdessen gemäß einem ereignisbasierten Algorithmustyp erzeugt wird.

5. Authentifizierungsvorrichtung nach Anspruch 3, die ferner eine Echtzeituhr umfasst, und wobei, wenn die Mikroprozessoreinheit (MPU) einen zweiten Tastenanschlag detektiert, während sie auf einen gültigen Code wartet, und die Authentifizierungsvorrichtung bereits mit dem benutzerspezifischen geheimen Seed personalisiert wurde, stattdessen das einmalige Passwort dann gemäß einem zeitbasierten Algorithmustyp, der den von der Echtzeituhr gezählten Zeitwert verwendet, erzeugt wird.

6. Authentifizierungsvorrichtung nach Anspruch 3, die ferner einen oder mehrere zusätzliche Photosensoren (2) beinhaltet, die derart positioniert sind, dass durch Legen der Authentifizierungsvorrichtung gegen einen Bildschirm jeder Photosensor (2) einen anderen Bereich eines auf dem Bildschirm gezeigten Bildmusters (7, 8) überlappt, wobei jeder der Bereiche des Bildmusters gemäß einer Zeitsequenzcodierung für die parallel zu übertragenden Daten zwischen einem hohen und einem niedrigen Niveau der Lichtintensität wechselt, wodurch höhere Datenübertragungsraten erreicht werden können.

7. Authentifizierungsvorrichtung nach Anspruch 6, wobei, wenn die Mikroprozessoreinheit (MPU) einen zweiten Tastenanschlag detektiert, während sie auf einen gültigen Code wartet, und die Authentifizierungsvorrichtung bereits mit dem benutzerspezifischen geheimen Seed personalisiert wurde, dann stattdessen das einmalige Passwort (OTP) gemäß einem ereignisbasierten Algorithmustyp erzeugt wird.

8. Authentifizierungsvorrichtung nach Anspruch 6, die ferner eine Echtzeituhr umfasst, und wobei, wenn die Mikroprozessoreinheit (MPU) einen zweiten Tastenanschlag detektiert, während sie auf einen gültigen Code wartet, und die Authentifizierungsvorrichtung bereits mit dem benutzerspezifischen geheimen Seed personalisiert wurde, stattdessen das einmalige Passwort (OTP) dann gemäß einem zeitbasierten Algorithmustyp, der den von der Echtzeituhr gezählten Zeitwert verwendet, erzeugt wird.

9. Authentifizierungsvorrichtung nach einem der Ansprüche 3 bis 5, die ferner mindestens einen oder mehrere photosensitive Eingabetasten beinhaltet, die es dem Benutzer der Authentifizierungsvorrichtung erlaubt, mittels Tastenanschlagkombinationen komplexe Anforderungen und Daten zur Mikroprozessoreinheit (MPU) zu übertragen.

10. Authentifizierungsvorrichtung nach einem der Ansprüche 1, 3, 4, 6, 7 und 9, wobei die Batterie entfernt ist und mindestens einer der Photosensoren (2) ein photovoltaisches Element ist und die Authentifizierungsvorrichtung durch das vom Photosensor (2) gesammelte Licht mit Strom versorgt wird.

## Revendications

1. Dispositif d'authentification, ayant la forme d'une carte de crédit, et comprenant ainsi une face frontale majeure parallèle à une face arrière majeure, comprenant :
a. un interrupteur à touche (1) et un photocapteur (2), ledit interrupteur à touche (1) étant connecté électriquement de telle sorte qu'une impulsion de tension soit générée lorsqu'une frappe est appliquée audit interrupteur à touche (1) par un utilisateur du dispositif d'authentification, ladite impulsion de tension ayant un début et une fin ;
b. une batterie ou un élément photovoltaïque pour l'alimentation du dispositif d'authentification ;
c. une unité de microprocesseur (MPU), ladite unité de microprocesseur (MPU) étant conçue de telle sorte qu'elle sorte du mode de veille par le début d'une impulsion de tension d'une frappe, et vérifie la sortie dudit photocapteur (2) après la fin de ladite impulsion de tension de frappe et, en cas de vérification positive, génère un mot de passe à usage unique (OTP), pendant que dans tous les cas, l'unité de microprocesseur (MPU) retourne en mode de veille après des durées prédéterminées ;
d. un dispositif d'affichage (3) destiné à afficher le mot de passe à usage unique (OTP) ; le dispositif d'authentification étant **caractérisé en ce qu'**il comprend une touche d'entrée photosensible (1, 2) constituée par ledit interrupteur à touche (1) apparié avec ledit photocapteur (2), ledit photocapteur (2) étant disposé suffisamment près dudit interrupteur à touche (1) pour que lorsque l'utilisateur du dispositif d'authentification applique une frappe en appuyant sur ledit interrupteur à touche (1) avec un doigt, ou entre deux doigts appuyant sur les deux faces opposées du dispositif d'authentification, un doigt couvre également le photocapteur (2), réduisant sensiblement la quantité de lumière qui atteint le photocapteur (2), et **en ce que**, lorsqu'elle vérifie la sortie dudit photocapteur, ladite unité de microprocesseur (MPU) est conçue pour vérifier si une augmentation prédéterminée de la quantité de lumière atteignant le photocapteur (2) a eu lieu essentiellement en même temps que la fin de ladite impulsion de tension de frappe.

2. Dispositif d'authentification selon la revendication 1, comprenant en outre une horloge en temps réel, l'algorithme de génération du mot de passe à usage unique étant d'un type fondé sur l'heure actuelle utilisant la valeur de temps comptée par ladite horloge en temps réel.

3. Dispositif d'authentification selon la revendication 1, dans lequel :
ladite unité de microprocesseur (MPU) est conçue pour, en cas de vérification positive, attendre des signaux modulés par la lumière dudit photocapteur (2) jusqu'à ce qu'elle détecte un code valide, et générer en conséquence un mot de passe à usage unique lorsque ledit code valide représente un code de défi, ou générer un numéro d'autorisation de transaction lorsque ledit code valide représente des données à signer, ou écrire dans la mémoire une clé secrète spécifique à l'utilisateur lorsque ledit code valide représente une clé secrète et que le dispositif d'authentification n'a pas encore été personnalisé, pendant que dans tous les cas l'unité de microprocesseur (MPU) retourne en mode de veille après des durées prédéterminées ;
le dispositif d'affichage (3) étant conçu pour afficher ledit mot de passe à usage unique, ou ledit numéro d'autorisation de transaction.

4. Dispositif d'authentification selon la revendication 3, dans lequel, lorsque ladite unité de microprocesseur (MPU) détecte une seconde frappe pendant qu'elle attend un code valide, et que le dispositif d'authentification a déjà été personnalisé avec la clé secrète spécifique à l'utilisateur, le mot de passe à usage unique est généré selon un type d'algorithme fondé sur un événement.

5. Dispositif d'authentification selon la revendication 3, comprenant en outre une horloge en temps réel et dans lequel, si ladite unité de microprocesseur (MPU) détecte une seconde frappe pendant qu'elle attend un code valide, et que le dispositif d'authentification a déjà été personnalisé avec la clé secrète spécifique à l'utilisateur, alors le mot de passe à usage unique est généré selon un type d'algorithme fondé sur le temps, en utilisant la valeur de temps comptée par ladite horloge en temps réel.

6. Dispositif d'authentification selon la revendication 3, comprenant en outre un ou plusieurs photocapteurs supplémentaires (2), disposés de telle sorte que lorsque le dispositif d'authentification est placé contre un écran, chaque photocapteur (2) chevauche une zone différente d'un motif d'image (7, 8) représenté sur ledit écran, chacune des zones dudit motif d'image variant entre un niveau élevé et faible d'intensité lumineuse selon une séquence temporelle qui code pour les données à transférer en parallèle, des taux de transfert de données plus élevés pouvant être obtenus.

7. Dispositif d'authentification selon la revendication 6, dans lequel, lorsque ladite unité de microprocesseur (MPU) détecte une seconde frappe pendant qu'elle attend un code valide, et que le dispositif d'authentification a déjà été personnalisé avec la clé secrète spécifique à l'utilisateur, alors le mot de passe à usage unique (OTP) est généré selon un type d'algorithme fondé sur un événement.

8. Dispositif d'authentification selon la revendication 6, comprenant en outre une horloge en temps réel et dans lequel, lorsque ladite unité de microprocesseur (MPU) détecte une seconde frappe pendant qu'elle attend un code valide, et que le dispositif d'authentification a déjà été personnalisé avec la clé secrète spécifique à l'utilisateur, alors le mot de passe à usage unique (OTP) est généré selon un type d'algorithme fondé sur le temps, en utilisant la valeur de temps comptée par ladite horloge en temps réel.

9. Dispositif d'authentification selon l'une quelconque des revendications 3 à 5, comprenant en outre au moins une touche d'entrée photosensible supplémentaire, permettant à l'utilisateur du dispositif d'authentification de transférer des demandes et des données complexes vers l'unité de microprocesseur (MPU), au moyen de combinaisons de frappe.

10. Dispositif d'authentification selon l'une quelconque des revendications 1, 3, 4, 6, 7 et 9, dans lequel ladite batterie est retirée et au moins un desdits photocapteurs (2) est un élément photovoltaïque et le dispositif d'authentification est alimenté par la lumière recueillie par le photocapteur (2).
